(19) Europäisches Patentamt
European Patent Office
Office européen des brevets

(11) **EP 2 455 999 A1**

(12) **EUROPEAN PATENT APPLICATION**
published in accordance with Art. 153(4) EPC

(43) Date of publication:
**23.05.2012   Bulletin 2012/21**

(21) Application number: **10799819.7**

(22) Date of filing: **12.07.2010**

(51) Int Cl.:
*H01M 4/62* (2006.01)   *H01M 4/06* (2006.01)
*H01M 6/06* (2006.01)   *H01M 6/22* (2006.01)
*H01M 10/26* (2006.01)

(86) International application number:
**PCT/JP2010/061786**

(87) International publication number:
**WO 2011/007761 (20.01.2011 Gazette 2011/03)**

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority:  **16.07.2009   JP 2009168135**

(71) Applicant: **Sumitomo Seika Chemicals Co. Ltd.
Kako-gun Hyogo 675-0145 (JP)**

(72) Inventors:
• **MORIMITSU, Yuichiro
Himeji-shi
Hyogo 672-8076 (JP)**

• **YOSHINAKA, Masatoyo
Tokyo 102-0073 (JP)**
• **TAKEMORI, Shinichi
Himeji-shi
Hyogo 672-8076 (JP)**

(74) Representative: **Oldroyd, Richard Duncan
Elkington and Fife LLP
Prospect House
8 Pembroke Road
GB-Sevenoaks, Kent TN13 1XR (GB)**

(54) **GELLING AGENT FOR AN ELECTROLYTE SOLUTION FOR AN ALKALINE BATTERY**

(57)    A gelling agent capable of turning an electrolyte solution for an alkaline battery into a gel, which is less likely to cause syneresis, is composed of particles of a carboxyl group-containing polymer, and a 0.1% by weight aqueous solution has a viscosity of at least 3,000 mPa·s at a pH of 7. The particles of a carboxyl group-containing polymer are normally obtainable by polymerizing a polymerizable material containing α,β-unsaturated carboxylic acids, for example, a polymerizable material containing α,β-unsaturated carboxylic acids and a compound having two or more ethylenically unsaturated groups as a cross-linking agent, in an inert solvent which dissolves the α,β-unsaturated carboxylic acids but does not dissolve particles of a carboxyl group-containing polymer. The above-mentioned viscosity is achieved by adjusting the balance among the concentration of the α,β-unsaturated carboxylic acids, the concentration of a cross-linking agent and a polymerization temperature during polymerization.

EP 2 455 999 A1

**Description**

TECHNICAL FIELD

The present invention relates to a gelling agent, in particular, to a gelling agent for an electrolyte solution for an alkaline battery.

BACKGROUND ART

There has been known, as an electrode for an alkaline battery, particularly, as a negative electrode, an electrode obtained by gelling an alkaline electrolyte solution together with an electrode active material such as a zinc powder, and carboxymethyl cellulose, a natural gum and the like have been known as a conventional gelling agent for forming the electrode.

However, it is required for a gelling agent for an electrolyte solution for an alkaline battery to be capable of forming a gel that is stable over a long period even under strong alkaline conditions by an alkaline electrolyte solution, and also to enhance dispersibility of an electrode active material, which is necessary for achieving satisfactory battery performances, on the gel, and to impart various properties such as a high impact resistance which protects the interior when external impact is applied to an alkaline battery, at one time. Therefore, a fine powder or a particulate material of a carboxyl group-containing polymer, which contains an $\alpha,\beta$-unsaturated carboxylic acid, particularly, acrylic acid or methacrylic acid or a salt thereof as a main constituent monomer component, has recently been used more often as a gelling agent which easily satisfies the above requirements (for example, Patent Literatures 1, 2 and 3).

However, a gel formed using a fine powder of a carboxyl group-containing polymer and the like is likely to cause a phenomenon called "syneresis" in which an alkaline electrolyte solution leaches and comes out on a surface, when an alkaline battery is stored at normal temperature for a long period. The syneresis not only impairs alkaline battery performances, but also causes a liquid leakage phenomenon, i.e., a phenomenon in which an alkaline electrolyte liquid leaks out of an outer case of an alkaline battery.

The fine powder of a carboxyl group-containing polymer is likely to generate massive materials (agglomerates) when added to an alkaline electrolyte solution. Therefore, in a case of gelling of an alkaline electrolyte solution, the formation of massive materials is suppressed by adding the fine powder of a carboxyl group-containing polymer while stirring the alkaline electrolyte solution at high speed. However, according to such a method, a large amount of air is introduced in the form of a bubble in the process of gelling of the alkaline electrolyte solution and the thus formed gel becomes a bubble-containing state. Since the volume of a gel in the bubble-containing state increases in proportion to air bubbles introduced, a filling rate of the gel per unit volume decreases in a case of filling into an outer case of an alkaline battery, and thus it becomes difficult to enhance battery performances. Therefore, it is necessary for the gel in a bubble-containing state to remove the introduced air bubbles. However, it is very difficult to effectively remove the air bubbles even if time and effort are taken for this purpose.

PRIOR ART LITERATURES

PATENT LITERATURES

Patent Literature 1: Japanese Patent Application Laid-Open No. 2003-123763
Patent Literature 2: Japanese Patent Application Laid-Open No. 2007-294409
Patent Literature 3: Japanese Patent Application Laid-Open No. 2002-184395

DISCLOSURE OF THE INVENTION

PROBLEMS TO BE SOLVED BY THE INVENTION

An object of the present invention is to suppress the occurrence of syneresis in a gel of an electrolyte solution for an alkaline battery formed using particles of a carboxyl group-containing polymer.

Another object of the present invention is to suppress the occurrence of syneresis and also to enable easy removal of air bubbles introduced, in a gel of an electrolyte solution for an alkaline battery formed using particles of a carboxyl group-containing polymer.

MEANS FOR SOLVING THE PROBLEMS

The gelling agent for an electrolyte solution for an alkaline battery of the present invention is composed of particles of a carboxyl group-containing polymer. A 0.1% by weight aqueous solution of the gelling agent has a viscosity of at least 3,000 mPa·s at a pH of 7. A gel of an alkaline electrolyte solution formed using the gelling agent is less likely to cause syneresis.

In an aspect of the gelling agent for an electrolyte solution for an alkaline battery of the present invention, a 0.5% by weight aqueous solution has a viscosity of at least 40,000 at a pH of 7. Particularly, in the gelling agent for an electrolyte solution for an alkaline battery in this aspect, a ratio (A/B) of a viscosity (A) of the 0.5% by weight aqueous solution at a pH of 7 to a viscosity (B) of the 0.1% aqueous solution at a pH of 7 is preferably from 6 to 18. The gelling agent in this aspect can easily remove air bubbles introduced when a gel of an alkaline electrolyte solution is formed.

In the gelling agent for an electrolyte solution for an alkaline battery of the present invention, the particles of a carboxyl group-containing polymer are normally obtainable by polymerizing a polymerizable material containing $\alpha,\beta$-unsaturated carboxylic acids in an inert solvent which dissolves the $\alpha,\beta$-unsaturated carboxylic acids but does not dissolve particles of a carboxyl group-containing polymer.

The electrode for an alkaline battery of the present invention includes a gelled body obtainable by adding an electrode active material and the gelling agent for an electrolyte solution for an alkaline battery of the present invention to an alkaline electrolyte solution. The electrode may be provided with a current collector disposed to the gelled body. Since the electrode for an alkaline battery of the present invention is formed using the gelling agent of the present invention, it is less likely to cause syneresis. The electrode formed using a specific gelling agent of the present invention can easily remove air bubbles introduced upon formation to increase the density, thus can improve battery characteristics of an alkaline battery.

The alkaline battery of the present invention is provided with the electrode for an alkaline battery of the present invention. The alkaline battery is less likely to cause deterioration of battery performances and liquid leakage due to syneresis. In addition, the alkaline battery of the present invention can enhance battery characteristics by increasing a filling rate of the electrode per unit volume when choosing a specific electrode of the present invention.

Other objects and effects of the present invention will be mentioned in the following detailed description.

EMBODIMENTS OF THE INVENTION

The gelling agent for an electrolyte solution for an alkaline battery according to the present invention comprises particles of a carboxyl group-containing polymer. Herein, there is no particular limitation on the carboxyl group-containing polymer, as long as the polymer can be utilized as a gelling agent of an electrolyte solution for an alkaline battery, i.e., an alkaline electrolyte solution described below. Usually, the polymer is produced by polymerizing a polymerizable material containing $\alpha,\beta$-unsaturated carboxylic acids as a main monomer component.

Examples of a carboxyl group-containing polymer preferable in the present invention can include a cross-linked carboxyl group-containing polymer obtainable by polymerizing a polymerizable material containing $\alpha,\beta$-unsaturated carboxylic acids and a compound having two or more ethylenically unsaturated groups as a cross-linking agent (hereinafter sometimes referred to as a polymerizable material A) and an alkyl-modified carboxyl group-containing polymer obtainable by polymerizing a polymerizable material containing $\alpha,\beta$-unsaturated carboxylic acids and an acrylic acid-based alkyl ester having 10 to 30 carbon atoms in the alkyl group (hereinafter sometimes referred to as a polymerizable material B).

Examples of the $\alpha,\beta$-unsaturated carboxylic acids used in the polymerizable materials A and B can include, but are not limited to, $\alpha,\beta$-unsaturated carboxylic acids such as acrylic acid, methacrylic acid, crotonic acid, maleic acid, itaconic acid and fumaric acid; $\alpha,\beta$-unsaturated carboxylic acid alkyl esters such as methyl acrylate, ethyl acrylate, octyl acrylate, lauryl acrylate, myristyl acrylate, palmityl acrylate, stearyl acrylate, eicosanyl acrylate, behenyl acrylate, methyl methacrylate, ethyl methacrylate, octyl methacrylate, lauryl methacrylate, myristyl methacrylate, palmityl methacrylate, stearyl methacrylate, eicosanyl methacrylate and behenyl methacrylate. Among these, an $\alpha,\beta$-unsaturated carboxylic acid is used particularly preferably in the polymerizable material B. In the polymerizable materials A and B, the $\alpha,\beta$-unsaturated carboxylic acids may be used alone, or two or more of these compounds may be used in combination.

Examples of the compound having two or more ethylenically unsaturated groups used in the polymerizable material A can include, but are not limited to, acrylic acid esters having two or more substitutions on a polyol, allyl ethers having two or more substitutions on a polyol, diallyl phthalate, triallyl phosphate, allyl methacrylate, tetraallyloxyethane, triallylcyanurate, divinyl adipate, vinyl crotonate, 1,5-hexadiene and divinylbenzene. Herein, examples of the polyol for forming acrylic acid esters and allyl ethers can include ethylene glycol, propylene glycol, polyoxyethylene glycol, polyoxypropylene glycol, glycerin, polyglycerin, trimethylolpropane, pentaerythritol, saccharose and sorbitol.

Particularly preferred compounds having two or more ethylenically unsaturated groups are allyl ethers obtained using pentaerythritol or saccharose as a polyol since a gelling agent capable of forming a gel having high thickening properties can be obtained even when used in a small amount.

Two or more compounds having two or more ethylenically unsaturated groups may be used in combination.

The acrylic acid-based alkyl ester having 10 to 30 carbon atoms in the alkyl group used in the polymerizable material B means an ester of acrylic acid or methacrylic acid and a higher alcohol having 10 to 30 carbon atoms in the alkyl group, and examples thereof can include lauryl acrylate, myristyl acrylate, palmityl acrylate, stearyl acrylate, eicosanyl acrylate, behenyl acrylate, lauryl methacrylate, myristyl methacrylate, palmityl methacrylate, stearyl methacrylate, eicosanyl methacrylate, behenyl methacrylate and tetracosanyl methacrylate. Two or more acrylic acid-based alkyl esters may be used in combination.

Examples of particularly preferred acrylic acid-based alkyl ester having 10 to 30 carbon atoms in the alkyl group can include stearyl methacrylate, eicosanyl methacrylate, behenyl methacrylate, tetracosanyl methacrylate, and a mixture thereof (for example, trade name "BLEMMER VMA70" of NOF Corporation which is a mixture of 10 to 20 parts by mass of stearyl methacrylate, 10 to 20 parts by mass of eicosanyl methacrylate, 59 to 80 parts by mass of behenyl methacrylate and at most 1 part by mass of tetracosanyl methacrylate) since they can form a gel of an electrolyte solution for an alkaline battery having remarkable viscosity characteristics.

Particles of a carboxyl group-containing polymer can be produced by polymerizing a predetermined polymerizable material, for example, the polymerizable material A or B in an inert solvent in the presence of a radical polymerization initiator.

Examples of the radical polymerization initiator used in this case can include, but are not limited to, $\alpha,\alpha'$-azobisisobutyronitrile, 2,2'-azobis-2,4-dimethyl valeronitrile, dimethyl-"2,2'-azobisisobutyrate, benzoyl peroxide, lauroyl peroxide, cumene hydroperoxide and tert-butyl hydroperoxide.

The usage of the radical polymerization initiator is preferably set within a range from 0.01 to 0.45 parts by mass, and more preferably from 0.01 to 0.35 parts by mass, relative to 100 parts by mass of the $\alpha,\beta$-unsaturated carboxylic acids. When the usage of the radical polymerization initiator is less than 0.01 parts by mass, the reaction rate decreases and it may become difficult to economically prepare a carboxyl group-containing polymer. In contrast, when the usage of the radical polymerization initiator is more than 0.45 parts by mass, the reaction rate may excessively increase, and thus it becomes difficult to control the reaction.

The inert solvent used in the production of particles of a carboxyl group-containing polymer means a solvent which can dissolve contents of a polymerizable material such as the polymerizable material A or B, namely, $\alpha,\beta$-unsaturated carboxylic acids, a compound having two or more ethylenically unsaturated groups and an acrylic acid-based alkyl ester having 10 to 30 carbon atoms in the alkyl group, but does not dissolve particles of a carboxyl group-containing polymer formed by polymerization.

Examples of the inert solvent can include n-pentane, n-hexane, n-heptane, n-octane, isooctane, cyclopentane, methylcyclopentane, cyclohexane, methylcyclohexane, benzene, toluene, xylene, chlorobenzene, ethylene dichloride, ethyl acetate, isopropyl acetate, ethyl methyl ketone and isobutyl methyl ketone. Among these solvents, ethylene dichloride or n-hexane is stable in quality and also easily available, and is thus used particularly preferably.

When the polymerizable material is polymerized in an inert solvent, usually, the reaction atmosphere is preferably set to an atmosphere of an inert gas such as a nitrogen gas or an argon gas. The reaction temperature upon polymerization is preferably set within a range from 50 to 90°C, and more preferably from 55 to 90°C, in order to suppress an increase in viscosity of the reaction solution and to facilitate the reaction control. The reaction time upon polymerization is hardly generally determined since it varies depending on the reaction temperature. Usually, it is preferably set within a range from 2 to 10 hours.

After the completion of the reaction, when the reaction solution is heated to 80 to 130°C to remove an inert solvent through volatilization, it is possible to obtain white fine powdered particles of a carboxyl group-containing polymer having an average particle diameter of about 1 to 10 $\mu$m. In this process, when the heating temperature is less than 80°C, it may be necessary to take a long time for drying. In contrast, when the heating temperature is more than 130°C, the viscosity of a gel produced using the gelling agent of the present invention may deteriorate.

A 0.1% by weight aqueous solution of particles of a carboxyl group-containing polymer used in the present invention has a viscosity of at least 3,000 mPa·s, preferably of at least 3,500 mPa·s, and more preferably of at least 4,000 mPa·s, at a pH of 7. When the viscosity is less than 3,000 mPa·s, it becomes difficult to prepare a gel of an alkaline electrolyte solution which is less likely to cause syneresis.

There is no particular limitation on the upper limit of the viscosity of the 0.1% by weight aqueous solution of particles of a carboxyl group-containing polymer at a pH of 7. Usually, the upper limit is preferably at most 10,000 mPa·s.

A 0.5% by weight aqueous solution of particles of a carboxyl group-containing polymer used in the present invention preferably has a viscosity of at least 40,000 mPa·s, and particularly preferably of at least 50,000 mPa·s, at a pH of 7. The particles of a carboxyl group-containing polymer, which also meet this viscosity condition, enable the production of a gel of an alkaline electrolyte solution which is less likely to cause syneresis, and also enable easy removal of air bubbles introduced when a gel of an alkaline electrolyte solution is produced, from the gel.

There is no particular limitation on the upper limit of a viscosity of the 0.5% by weight aqueous solution of particles of a carboxyl group-containing polymer at a pH of 7. Usually, the upper limit is preferably at most 70,000 mPa·s.

The viscosity of a 0.1% by weight aqueous solution at a pH of 7 and the viscosity of a 0.5% by weight aqueous solution at a pH of 7 are measured by a method described in the below-mentioned Examples.

When a 0.5% aqueous solution of the particles of a carboxyl group-containing polymer has a viscosity of at least 40,000 mPa·s at a pH of 7, a ratio (A/B) of a viscosity (A) of the 0.5% aqueous solution at a pH of 7 to a viscosity (B) of the 0.1% aqueous solution at a pH of 7 is preferably set within a range from 6 to 18, and more preferably from 6 to 15. When the ratio is within the above range, it is possible to more easily remove air bubbles introduced when a gel of an alkaline electrolyte solution is formed, from the gel. The details are described below.

Upon polymerization of a polymerizable material, the respective viscosities can be adjusted by controlling the concentration of the α,β-unsaturated carboxylic acids, the concentration of the cross-linking agent or the concentration of the acrylic acid-based alkyl ester having 10 to 30 carbon atoms in the alkyl group in an inert solvent, and the polymerization temperature. More specifically, particles of a carboxyl group-containing polymer satisfying the above viscosity conditions can be prepared by adjusting the balance among the concentration of the α,β-unsaturated carboxylic acids, the concentration of the cross-linking agent or the concentration of the acrylic acid-based alkyl ester having 10 to 30 carbon atoms in the alkyl group, and the polymerization temperature, with reference to the following directions.

- When the concentration of the α,β-unsaturated carboxylic acids in an inert solvent is set at a low concentration, there are tendencies that a viscosity of the 0.1% by weight aqueous solution at a pH of 7 may decrease, and that a viscosity of the 0.5% by weight aqueous solution at a pH of 7 may decrease.
- When the concentration of the α,β-unsaturated carboxylic acids in an inert solvent is set at a high concentration, there are tendencies that a viscosity of the 0.1% by weight aqueous solution at a pH of 7 may increase, and a viscosity of the 0.5% by weight aqueous solution at a pH of 7 may increase.
- When the concentration of the cross-linking agent or the concentration of the acrylic acid-based alkyl ester having 10 to 30 carbon atoms in the alkyl group in an inert solvent is set at a low concentration, there are tendencies that a viscosity of the 0.1% by weight aqueous solution at a pH of 7 may increase, and that a viscosity of the 0.5% by weight aqueous solution at a pH of 7 may decrease.

- When the concentration of the cross-linking agent or the concentration of the acrylic acid-based alkyl ester having 10 to 30 carbon atoms in the alkyl group in an inert solvent is set at a high concentration, there are tendencies that a viscosity of the 0.1% by weight aqueous solution at a pH of 7 may decrease, and that a viscosity the 0.5% by weight aqueous solution at a pH of 7 may increase.
- When the polymerization temperature is set at a low temperature, there is a tendency that both a viscosity of the 0.1% by weight aqueous solution and a viscosity of the 0.5% by weight aqueous solution may increase.
- When the polymerization temperature is set at a high temperature, there is a tendency that both a viscosity of the 0.1% by weight aqueous solution and a viscosity of the 0.5% by weight aqueous solution may decrease.

When particles of a cross-linked carboxyl group-containing polymer are produced using the polymerizable material A, the usage of the α,β-unsaturated carboxylic acids is preferably set within a range from 6 to 25 parts by volume, more preferably from 8 to 22 parts by volume, still more preferably from 13 to 20 parts by volume, relative to 100 parts by volume of the inert solvent. When the usage of the α,β-unsaturated carboxylic acids is less than 6 parts by volume, the amount of the resulting particles of a cross-linked carboxyl group-containing polymer may decrease, resulting in lack of efficiency and economy. In contrast, when the usage of the α,β-unsaturated carboxylic acids is more than 25 parts by volume, particles of a cross-linked carboxyl group-containing polymer may be precipitated with the progress of the polymerization reaction. Because of this, it may become difficult to uniformly stir the reaction system, and thus it may become difficult to control the reaction.

The usage of the compound having two or more ethylenically unsaturated groups, i.e., a cross-linking agent is preferably set within a range from 0.01 to 2 parts by mass, and more preferably from 0.3 to 1.5 parts by mass, relative to 100 parts by mass of the α,β-unsaturated carboxylic acids. When the usage is less than 0.01 parts by mass, the viscosity of a gel produced using the resulting particles of a carboxyl group-containing polymer may decrease, and it may become impossible to form a gel that is stable for a long period under strong alkaline conditions by an alkaline electrolyte solution. In contrast, when the usage is more than 2 parts by mass, an insoluble gel is likely to be formed in the gel produced using the resulting particles of a carboxyl group-containing polymer.

When particles of an alkyl-modified carboxyl group-containing polymer are produced using the polymerizable material B, the usage of the α,β-unsaturated carboxylic acids is preferably set within a range from 6 to 25 parts by volume, more preferably within a range from 8 to 22 parts by volume, and still more preferably within a range from 13 to 20 parts by volume, relative to 100 parts by volume of the inert solvent. When the usage of the α,β-unsaturated carboxylic acids is less than 6 parts by volume, the amount of the resulting particles of an alkyl-modified carboxyl group-containing polymer may decrease, resulting in lack of efficiency and economy. In contrast, when the usage is more than 25 parts by volume, particles of an alkyl-modified carboxyl group-containing polymer are precipitated with the progress of the polymerization reaction. Because of this, it may become difficult to uniformly stir the reaction system, and thus it may become difficult to control the reaction.

The usage of the acrylic acid-based alkyl ester having 10 to 30 carbon atoms in the alkyl group is preferably set to at most 20 parts by mass, and more preferably 1 to 10 parts by mass, relative to 100 parts by mass of the $\alpha,\beta$-unsaturated carboxylic acids. When the usage is more than 20 parts by mass, the resulting particles of a carboxyl group-containing copolymer may become less soluble in an alkaline electrolyte solution, and thus it may become difficult to produce a gel of an alkaline electrolyte solution.

The addition of the gelling agent for an electrolyte solution for an alkaline battery of the present invention to an alkaline electrolyte solution enables preparation of a gelled body of the alkaline electrolyte solution. Herein, there is no particular limitation on the alkaline electrolyte solution which can be gelled, as long as it can be used in an alkaline battery, and examples thereof include a potassium hydroxide aqueous solution and a sodium hydroxide aqueous solution.

When preparing a gelled body of an alkaline electrolyte solution, a gel-like electrode for an alkaline battery can be obtained if an electrode active material is added, together with the gelling agent of the present invention, to the alkaline electrolyte solution. In this case, a positive or negative electrode for an alkaline battery can be produced by selecting the electrode active material. Examples of the electrode active material used for preparing a positive electrode include manganese compounds such as manganese dioxide; nickel compounds such as nickel oxyhydroxide and an eutectic compound of at least one of the elements of zinc and cobalt with nickel; and ferrate (VI) compounds such as potassium ferrate (VI), sodium ferrate (VI), lithium ferrate (VI), cesium ferrate (VI), silver ferrate (VI), strontium ferrate (VI), magnesium ferrate (VI), calcium ferrate (VI), barium ferrate (VI), and zinc ferrate (VI). Examples of the electrode active material used to produce a negative electrode include indium, bismuth, aluminum, lithium, sodium, potassium, rubidium, cesium, beryllium, magnesium, calcium, strontium, barium, titanium, vanadium, iron, copper, zirconium, niobium, silver, gallium, zinc and zinc compounds such as a zinc alloy of zinc and tin. Since it is preferred to uniformly disperse the electrode active material in a gel-like electrode, a powdery electrode active material is preferably used.

When the gel-like electrode is produced, a potassium hydroxide aqueous solution having the concentration of 34 to 48% by mass is used particularly preferably as an alkaline electrolyte solution since it is possible to increase conductivity of the electrode and stability of the electrode active material.

The gel-like electrode can be used in an alkaline battery by optionally disposing a current collector.

When the gelled body of the alkaline electrolyte solution (hereinafter, the "gelled body" includes the gel-like electrode) is produced, various additives such as a preservative and a stabilizer can be optionally added to the alkaline electrolyte solution. When the gel-like electrode is produced, various additives for an electrode can be added to the alkaline electrolyte solution. Examples of the additive used in the production of the positive electrode include yttrium oxide, erbium oxide, ytterbium oxide and calcium fluoride from the viewpoint of an improvement in a capacity retention rate during storage of an alkaline battery. Examples thereof also include graphite, acetylene black and carbon black from the viewpoint of an improvement in conductivity. Examples of the additive used in the production of the negative electrode include titanium oxide, bismuth oxide, copper oxide, indium oxide, tin oxide and niobium oxide from the viewpoint of an improvement in thickening properties of the gelling agent.

When a gelled body is produced by adding the gelling agent of the present invention to an alkaline electrolyte solution, it is preferable to add the gelling agent of the present invention while stirring the alkaline electrolyte solution at high speed so as to suppress the formation of massive materials (agglomerates).

There is no limitation on the usage of the gelling agent for an electrolyte solution for an alkaline battery since it can be set depending on the purpose of enhancing dispersibility of an electrode active material and enhancing impact resistance which protects the interior when external impact is applied to an alkaline battery. Usually, the usage is preferably set within a range from 0.5 to 4.0% by weight, and more preferably to 1.0 to 3.0% by weight, based on the alkaline electrolyte solution.

In the production of a gelled body of an alkaline electrolyte solution, the alkaline electrolyte solution is stirred at high speed. Therefore, a large amount of air bubbles are usually introduced and the density of the resulting gelled body generally decreases. Accordingly, it is preferable that the air bubbles introduced upon production are removed from the gelled body.

In a gelled body obtained using a gelling agent which simultaneously satisfies the condition that the viscosity of a 0.5% by weight aqueous solution is at least 40,000 mPa·s at a pH of 7, among the gelling agent for an electrolyte solution for an alkaline battery of the present invention, air bubbles introduced can be removed easily by applying various deaeration methods, for example, a centrifugation method and a reduced pressure deaeration method, and accordingly a high density can be obtained. Particularly, the reduced pressure deaeration method can easily remove incorporated air bubbles only by disposing a gelled body under reduced pressure of about 10 to 20 torr, and thus air bubbles can be removed efficiently from a large amount of a gelled body using a simple device capable of setting such a reduced pressure circumstance.

The gelled body obtained using the gelling agent for an electrolyte solution for an alkaline battery of the present invention enables easy removal of air bubbles, particularly when it has moderate elasticity and hardness. Particularly when using a reduced pressure deaeration method and a gel surrounding air bubbles has elasticity and hardness which are likely to cause bursting of the gel at the time when the gel undergoes expansion to some extent, the air bubbles can be easily removed from the entire gelled body upon their expansion in the gelled body under reduced pressure. From such a viewpoint, when the viscosity of a 0.5% aqueous solution of the gelling agent for an electrolyte solution for an alkaline battery of the present invention is at least 40,000 mPa·s at a pH of 7, a ratio (A/B) of the viscosity (A) of a 0.5% aqueous solution at a pH of 7 to the viscosity (B) of a 0.1% aqueous solution at a pH of 7 is preferably set within a range from 6 to 18 as previously described. When the ratio is less than 6, the gelled body may become softer, and thus the gel flexibly expands along with air bubbles expanding under reduced pressure and the gelled body may sometimes expand without removal of air bubbles. In contrast, when the ratio is more than 18, since the gelled body may become stronger and thus hardly burst even if air bubbles expand under reduced pressure, the gelled body may sometimes expand without removal of air bubbles.

The alkaline battery of the present invention is, for example, a cylinder-type or button-type battery wherein a positive electrode and a negative electrode are housed in a metallic outer case in a state of being separated via a separator placed therebetween so as not to physically contact with each other, and the outer case is sealed with a gasket, a metal plate and a metal sealing plate so as to form at both ends thereof a terminal communicating with either the positive electrode or the negative electrode in a state where a current collector is optionally disposed to the positive or negative electrode, and also wherein the electrode for an alkaline battery of the present invention is used in at least one of the electrodes of the positive electrode and the negative electrode.

In the cylinder-type alkaline battery among the alkaline battery of the present invention, generally, it is possible to use, as the negative electrode, the gel-like electrode for an alkaline battery according to the present invention in which a current collector is disposed to the gelled body, and to use, as the positive electrode, a conventional electrode in an alkaline battery. The general structure of such a cylinder-type alkaline battery is, for example, the structure described in Patent Literature 1 previously mentioned. In the button-type alkaline battery, generally, it is possible to use the gel-like electrode for an alkaline battery according to the present invention in both the positive and negative electrodes. The general structure of such a button-type alkaline battery is, for example, the structure described in Patent Literature 3 previously mentioned.

The alkaline battery of the present invention uses the electrode for an alkaline battery of the present invention and is therefore less likely to cause syneresis of an alkaline electrolyte solution in the electrode even when the battery is stored at normal temperature for a long period. Thus, in the alkaline battery of the present invention, battery performances are less likely to be impaired and liquid leakage is less likely to occur. In a case of using the electrode of the present invention, produced using the gelling agent of the present invention satisfying the condition that a viscosity of a 0.5% by weight aqueous solution is at least 40,000 mPa·s at a pH of 7, air bubbles introduced into the electrode can be easily removed to increase the density. Thus, it is possible for an alkaline battery of the present invention, using such an electrode, to achieve high battery performances by enhancing a filing rate per unit volume as compared with the case of using a conventional gel-like electrode.

EXAMPLES

Example 1

In a 500 ml volume four-necked flask equipped with a stirrer, a thermometer, a nitrogen blowing tube and a condenser, 45 g (42.9 ml) of acrylic acid, 0.248 g of pentaerythritol allyl ether, 0.153 g of $\alpha,\alpha'$-azobisisobutyronitrile and 150 g (223.9 9 ml) of n-hexane were charged. After they were uniformly stirred and mixed, a nitrogen gas was blown into the solution in order to remove oxygen present in an upper space of the reaction vessel, the raw materials and the solvent. Then, the mixture was heated to 60 to 62°C and maintained at the same temperature thereby to react for 4 hours while maintaining the inside of the reaction vessel in a nitrogen atmosphere.

After completion of the reaction, the resulting slurry was heated to 90°C to distil n-hexane off, and then dried under reduced pressure for 8 hours in an environment at 110°C under 10 mmHg to obtain 41 g of cross-plinked carboxyl group-containing polymer particles as a white fine powder.

Example 2

In a 500 ml volume four-necked flask equipped with a stirrer, a thermometer, a nitrogen blowing tube and a condenser, 45 g (42.9 ml) of acrylic acid, 0.248 g of pentaerythritol allyl ether, 0.1.53 g of $\alpha,\alpha'$-azobisisobutyronitrile and 150 g (223.9 ml) of n-hexane were charged. After they were uniformly stirred and mixed, a nitrogen gas was blown into the solution in order to remove oxygen present in an upper space of the reaction vessel, the raw materials and the solvent. Then, the mixture was heated to 64 to 66°C and maintained at the same temperature thereby to react for 4 hours while maintaining the inside of the reaction vessel in a nitrogen atmosphere.

After completion of the reaction, the resulting slurry was heated to 90°C to distill n-hexane off, and then dried under reduced pressure for 8 hours in an environment at 110°C under 10 mmHg to obtain 41 g of cross-linked carboxyl group-containing polymer particles as a white fine powder.

Example 3

In a 500 ml volume four-necked flask equipped with a stirrer, a thermometer, a nitrogen blowing tube and a condenser, 45 g (42.9 ml) of acrylic acid, 0.270 g of pentaerythritol allyl ether, 0.153 g of $\alpha,\alpha'$-azobisisobutyronitrile and 210.8 g (314.6 ml) of n-hexane were charged. After they were uniformly stirred and mixed, a nitrogen gas was blown into the solution in order to remove oxygen present in an upper space of the reaction vessel, the raw materials and the solvent. Then, the mixture was heated to 64 to 66°C and maintained at the same temperature thereby to react for 4 hours while maintaining the inside of the reaction vessel in a nitrogen atmosphere.

After completion of the reaction, the resulting slurry was heated to 90°C to distill n-hexane off, and then dried under reduced pressure for 8 hours in an environment at 110°C under 10 mmHg to obtain 41 g of cross-linked carboxyl group-containing polymer particles as a white fine powder.

Example 4

In a 500 ml volume four-necked flask equipped with a stirrer, a thermometer, a nitrogen blowing tube and a condenser, 45 g (42.9 ml) of acrylic acid, 0.248 g of pentaerythritol allyl ether, 0.153 g of $\alpha,\alpha'$-azobisisobutyronitrile and 150 g (223.9 ml) of n-hexane were charged. After they were uniformly stirred and mixed, a nitrogen gas was blown into the solution in order to remove oxygen present in an upper space of the reaction vessel, the raw materials and the solvent. Then, the mixture was heated to the reflux temperature and maintained at the same temperature thereby to react for 4 hours while maintaining the inside of the reaction vessel in a nitrogen atmosphere.

After completion of the reaction, the resulting slurry was heated to 90°C to distill n-hexane off, and then dried under reduced pressure for 8 hours in an environment at 110°C under 10 mmHg to obtain 41 g of cross-linked carboxyl group-containing polymer particles as a white fine powder.

Example 5

In a 500 ml volume four-necked flask equipped with a stirrer, a thermometer, a nitrogen blowing tube and a condenser, 45 g (42.9 ml) of acrylic acid, 0.220 g of pentaerythritol allyl ether, 0.153 g of $\alpha,\alpha'$-azobisisobutyronitrile and 210.8 g (314.6 ml) of n-hexane were charged. After they were uniformly stirred and mixed, a nitrogen gas was blown into the solution in order to remove oxygen present in an upper space of the reaction vessel, the raw materials and the solvent. Then, the mixture was heated to 64 to 66°C and maintained at the same temperature thereby to react for 4 hours while maintaining the inside of the reaction vessel in a nitrogen atmosphere.

After completion of the reaction, the resulting slurry was heated to 90°C to distil n-hexane off, and then dried under reduced pressure for 8 hours in an environment at 110°C under 10 mmHg to obtain 41 g of cross-linked carboxyl group-containing polymer particles as a white fine powder.

Comparative Example 1

In a 500 ml volume four-necked flask equipped with a stirrer, a thermometer, a nitrogen blowing tube and a condenser, 45 g (42.9 ml) of acrylic acid, 0.293 g of pentaerythritol allyl ether, 0.153 g of $\alpha,\alpha'$-azobisisobutyronitrile and 150 g (223.9 ml) of n-hexane were charged. After they were uniformly stirred and mixed, a nitrogen gas was blown into the solution in order to remove oxygen present in an upper space of the reaction vessel, the raw materials and the solvent. Then, the mixture was heated to the reflux temperature and maintained at the same temperature thereby to react for 4 hours while maintaining the inside of the reaction vessel in a nitrogen atmosphere.

After completion of the reaction, the resulting slurry was heated to 90°C to distill n-hexane off, and then dried under reduced pressure for 8 hours in an environment at 110°C under 10 mmHg to obtain 41 g of cross-linked carboxyl group-containing polymer particles as a white fine powder.

Comparative Example 2

In a 500 ml volume four-necked flask equipped with a stirrer, a thermometer, a nitrogen blowing tube and a condenser, 45 g (42.9 ml) of acrylic acid, 0.135 g of pentaerythritol allyl ether, 0.153 g of $\alpha,\alpha'$-azobisisobutyronitrile and

150 g (223.9 ml) of n-hexane were charged. After they were uniformly stirred and mixed, a nitrogen gas was blown into the solution in order to remove oxygen present in an upper space of the reaction vessel, the raw materials and the solvent. Then, the mixture was heated to 64 to 66°C and maintained at the same temperature thereby to react for 4 hours while maintaining the inside of the reaction vessel in a nitrogen atmosphere.

After completion of the reaction, the resulting slurry was heated to 90°C to distill n-hexane off, and then dried under reduced pressure for 8 hours in an environment at 110°C under 10 mmHg to obtain 41 g of cross-linked carboxyl group-containing polymer particles as a white fine powder.

Evaluation 1

With respect to the particles of a carboxyl group-containing polymer (particles of a cross-linked carboxyl group-containing polymer) obtained in Examples 1 to 5 as well as Comparative Examples 1 and 2, the viscosity of a 0.1% by weight aqueous solution at a pH of 7 and the viscosity of a 0.5% by weight aqueous solution at a pH of 7 were measured, respectively. The results are shown in Table 1. The method for measuring each viscosity is as follows.

(Viscosity of 0.1% by weight aqueous solution at pH of 7)

In a 1 L volume glass beaker, deionized water and particles of a carboxyl group-containing polymer were charged, and they were stirred for 3 hours with a magnetic stirrer to dissolve the particles of a carboxyl group-containing polymer. To the resulting solution, a 6% by weight sodium hydroxide aqueous solution for neutralization was added, and was stirred and mixed with an S-shape blade in accordance with CTFA (the Cosmetic, Toiletry and Fragrance Association) at a rate of 200 rpm for 1 hour to prepare an aqueous solution of the carboxyl group-containing polymer. In this case, the usage of deionized water, particles of a carboxyl group-containing polymer and a 6% by weight aqueous sodium hydroxide solution were set so that the concentration of the carboxyl group-containing polymer would be 0.1% by weight in the aqueous solution of the carboxyl group-containing polymer and the pH of the aqueous solution would be 7. Using a BH-type rotary viscometer, a viscosity of the resulting aqueous solution of the carboxyl group-containing polymer was measured after 60 seconds under the conditions of a rotor No. 5, 20 rpm and a temperature of 25°C.

(Viscosity of 0.5% by weight aqueous solution at pH of 7)

In a 1 L volume glass beaker, deionized water and particles of a carboxyl group-containing polymer were charged, and they were stirred for 3 hours with a magnetic stirrer to dissolve the particles of a carboxyl group-containing polymer. To the resulting solution, a 6% by weight sodium hydroxide aqueous solution for neutralization was added, and stirred and mixed with an S-shape blade in accordance with CTFA (the Cosmetic, Toiletry and Fragrance Association) at a rate of 200 rpm for 1 hour to prepare an aqueous solution of the carboxyl group-containing polymer. In this case, the usage of deionized water, particles of a carboxyl group-containing polymer and a 6% by weight aqueous sodium hydroxide solution were set so that the concentration of the carboxyl group-containing polymer would be 0.5% by weight in the aqueous solution of the carboxyl group-containing polymer and the pH of the aqueous solution would be 7. Using a BH-type rotary viscometer, a viscosity of the resulting aqueous solution of the carboxyl group-containing polymer was measured after 60 seconds under the conditions of a rotor No. 7, 20 rpm and a temperature of 25°C.

Evaluation 2

A test gel-like negative electrode for an alkaline battery was produced using the particles of a carboxyl group-containing polymer (particles of a cross-linked carboxyl group-containing polymer) obtained in Examples 1 to 5 as well as Comparative Examples 1 and 2, and syneresis and air bubble removability of the test gel-like negative electrode were evaluated. Evaluation methods are as follows. The results are shown in Table 1.

(Syneresis)

To 100 parts by weight of a gel solution prepared by adding 1.5% by weight of particles of a carboxyl group-containing polymer to 98.5% by weight of a 40% by weight potassium hydroxide aqueous solution and mixing them, 200 parts by weight of a zinc powder as an electrode active material was added, and uniformly stirred and mixed to produce a test gel-like negative electrode. About 40 ml of the test gel-like negative electrode was filled into a 50 ml measuring cylinder and left to stand for 7 days. Then, the height of entire contents of the measuring cylinder containing bleeding water leached from the test gel-like negative electrode and the height of only a portion of the test gel-like negative electrode excluding the bleeding water were measured, respectively, and a retention rate of the zinc powder was calculated according to the following equation. When the retention rate of the zinc powder is 98% or more, the test gel-like negative electrode causes less syneresis, and is rated as satisfactory (pass).

[Equation 1]

$$\text{Retention rate of zinc powder (\%)} = \frac{\text{Height of only portion of test gel - like negative electrode (mm)}}{\text{Entire height (mm)}} \times 100$$

(Removability of air bubbles)

To 100 parts by weight of a gel solution prepared by adding 1% by weight of particles of a carboxyl group-containing polymer to 99% by weight of a 40% by weight potassium hydroxide aqueous solution and mixing them, 200 parts by weight of a zinc powder as an electrode active material was added, and uniformly stirred and mixed to produce a test gel-like negative electrode. In a 200 ml beaker, 150 g of the test gel-like negative electrode was charged, and a height of the test gel-like negative electrode at this time (height before reduction of pressure) and the height of the test gel-like negative electrode after the beaker was left to stand under reduced pressure of 20 torr for 10 minutes (height after reduction of pressure) were measured, respectively, and a height rising rate of the test gel-like negative electrode was calculated according to the following equation. When the height rising rate is 200% or less, removability of air bubbles introduced when the test gel-like electrode was produced is satisfactory (pass).

[Equation 2]

$$\text{Height rising rate (\%)} = \frac{\text{Height after reduction of pressure (mm)}}{\text{Height before reduction of pressure (mm)}} \times 100$$

[Table 1]

Table 1

|  | Example 1 | Example 2 | Example 3 | Example 4 | Example 5 | Comparative Example 1 | Comparative Example 2 |
|---|---|---|---|---|---|---|---|
| Viscosity of 0.1% by weight aqueous solution at pH of 7 (B) | 5,900 | 5,500 | 3,900 | 3,300 | 7,400 | 2,600 | 2,500 |
| Viscosity of 0.5% by weight aqueous solution at pH of 7 (A) | 58,000 | 46,000 | 50,000 | 48,000 | 39,000 | 55,000 | 8,800 |

EP 2 455 999 A1

(continued)

|  | Example 1 | Example 2 | Example 3 | Example 4 | Example 5 | Comparative Example 1 | Comparative Example 2 |
|---|---|---|---|---|---|---|---|
| Viscosity ratio (A/B) | 9.8 | 8.4 | 12.8 | 14.5 | 5.3 | 21.2 | 3.5 |
| Retention rate of zinc powder (%) | 100 | 100 | 100 | 98 | 100 | 95 | 93 |
| Syneresis | Pass | Pass | Pass | Pass | Pass | Fail | Fail |
| Height rising rate (%) | 120 | 180 | 150 | 190 | >500 | 360 | >500 |
| Removability of air bubbles | Pass | Pass | Pass | Pass | Fail | Fail | Fail |

As is apparent from Table 1, the test gel-like negative electrodes produced using the particles of a carboxyl group-containing polymer of Examples 1 to 5 in which a viscosity of a 0.1% by weight aqueous solution is at least 3,000 mPa·s at a pH of 7, as a gelling agent, exhibit a high retention rate of a zinc powder and cause less syneresis. The test gel-like negative electrodes produced using the particles of a carboxyl group-containing polymer of Examples 1 to 4 in which a viscosity of a 0.5% by weight aqueous solution is at least 40,000 mPa·s at a pH of 7, as a gelling agent, exhibit a low height rising rate, and thus air bubbles introduced upon their production can be easily removed. Therefore, the gel-like negative electrodes can increase a filing rate in an outer case of an alkaline battery having a limited volume, by removing air bubbles therefrom to increase the density.

The present invention can be carried out in other specific forms without departing from the spirit or essential properties thereof. The above embodiment and example are therefore to be considered in all respects as illustrative and not restrictive. The scope of the present invention is indicated by the appended claims rather than by the foregoing description. All changes and modifications which come within the range of equivalency of the claims are therefore intended to be included within the scope of the present invention.

Claims

1.    A gelling agent for an electrolyte solution for an alkaline battery, consisting of:

   particles of a carboxyl group-containing polymer,
   wherein a 0.1% by weight aqueous solution has a viscosity of at least 3,000 mPa·s at a pH of 7.

2.    The gelling agent for an electrolyte solution for an alkaline battery according to claim 1, wherein a 0.5% by weight aqueous solution has a viscosity of at least 40,000 mPa·s at a pH of 7.

3.    The gelling agent for an electrolyte solution for an alkaline battery according to claim 2, wherein a ratio (A/B) of a viscosity (A) of the 0.5% by weight aqueous solution at a pH of 7 to a viscosity (B) of the 0.1% aqueous solution at a pH of 7 is from 6 to 18.

4.    The gelling agent for an electrolyte solution for an alkaline battery according to any one of claims 1 to 3, wherein the 0.1% by weight aqueous solution has a viscosity of 10,000 mPa·s or less at a pH of 7.

5.    The gelling agent for an electrolyte solution for an alkaline battery according to claim 4, wherein the 0.5% by weight aqueous solution has a viscosity of 70,000 mPa·s or less at a pH of 7.

6.    The gelling agent for an electrolyte solution for an alkaline battery according to any one of claims 1 to 3, wherein the particles of a carboxyl group-containing polymer are obtainable by polymerizing a polymerizable material containing $\alpha,\beta$-unsaturated carboxylic acids in an inert solvent which dissolves the $\alpha,\beta$-unsaturated carboxylic acids but does not dissolve particles of the carboxyl group-containing polymer.

7. The gelling agent for an electrolyte solution for an alkaline battery according to claim 6, wherein the polymerizable material contains a compound having two or more ethylenically unsaturated groups as a cross-linking agent.

8. The gelling agent for an electrolyte solution for an alkaline battery according to claim 7, wherein the $\alpha,\beta$-unsaturated carboxylic acids are an $\alpha,\beta$-unsaturated carboxylic acid, and the cross-linking agent is pentaerythritol allyl ether.

9. An electrode for an alkaline battery, comprising:

   a gelled body obtainable by adding an electrode active material and a gelling agent to an alkaline electrolyte solution,
   wherein the gelling agent is composed of particles of a carboxyl group-containing polymer, and also a 0.1% by weight aqueous solution has a viscosity of at least 3,000 mPa·s at a pH of 7.

10. The electrode for an alkaline battery according to claim 9, wherein a 0.5% by weight aqueous solution of the gelling agent has a viscosity of at least 40,000 mPa·s at a pH of 7.

11. The electrode for an alkaline battery according to claim 10, wherein air bubbles introduced upon production are removed from the gelled body.

12. The electrode for an alkaline battery according to claim 11, wherein the alkaline electrolyte solution is a potassium hydroxide aqueous solution having a concentration of 34 to 48% by mass.

13. The electrode for an alkaline battery according to any one of claims 9 to 12, which is provided with a current collector disposed to the gelled body.

14. An alkaline battery comprising a positive electrode, a negative electrode and a separator placed in between the positive electrode and the negative electrode,
   wherein at least one of the electrodes of the positive electrode and the negative electrode includes a gelled body obtainable by adding an electrode active material and a gelling agent to an alkaline electrolyte solution, and wherein particles of a carboxyl group-containing polymer are used as the gelling agent and a 0.1% by weight aqueous solution of the gelling agent has a viscosity of at least 3,000 mPa·s at a pH of 7.

15. The alkaline battery according to claim 14, wherein a 0.5% by weight aqueous solution of the gelling agent has a viscosity of at least 40,000 mPa·s at a pH of 7.

16. The alkaline battery according to claim 14 or 15, wherein a current collector is disposed to the gelled body.

<table>
<tr><td colspan="2" align="center">**INTERNATIONAL SEARCH REPORT**</td><td colspan="2">International application No.<br>PCT/JP2010/061786</td></tr>
</table>

**A. CLASSIFICATION OF SUBJECT MATTER**
*H01M4/62*(2006.01)i, *H01M4/06*(2006.01)i, *H01M6/06*(2006.01)i, *H01M6/22*(2006.01)i, *H01M10/26*(2006.01)n

According to International Patent Classification (IPC) or to both national classification and IPC

**B. FIELDS SEARCHED**

Minimum documentation searched (classification system followed by classification symbols)
H01M4/62, H01M4/06, H01M6/06, H01M6/22, H01M10/26

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2009/011264 A1 (Sumitomo Seika Chemicals Co., Ltd.), 22 January 2009 (22.01.2009), paragraphs [0059] to [0063], [0065] to [0067], [0085] & CA 2693471 A1 & US 2010/0196763 A1 & EP 2172997 A1 | 1-16 |
| A | JP 2005-38697 A (Toshiba Battery Co., Ltd.), 10 February 2005 (10.02.2005), claims (Family: none) | 1-16 |
| A | JP 2004-259454 A (Toshiba Battery Co., Ltd.), 16 September 2004 (16.09.2004), claims (Family: none) | 1-16 |

☒ Further documents are listed in the continuation of Box C.  ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>13 October, 2010 (13.10.10) | Date of mailing of the international search report<br>26 October, 2010 (26.10.10) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2010/061786

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2-119053 A  (Sanyo Chemical Industries, Ltd.),<br>07 May 1990 (07.05.1990),<br>claims; page 6, lower left column to page 7, upper left column<br>(Family: none) | 1-16 |

Form PCT/ISA/210 (continuation of second sheet) (July 2009)

**EP 2 455 999 A1**

**REFERENCES CITED IN THE DESCRIPTION**

**Patent documents cited in the description**

- JP 2003123763 A
- JP 2007294409 A
- JP 2002184395 A